(19) Europäisches Patentamt

European Patent Office

Office européen des brevets

(11) **EP 1 412 830 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(21) Anmeldenummer: **02743042.0**

(22) Anmeldetag: **17.05.2002**

(51) Int Cl.⁷: $G05D\ 23/20$, $A47J\ 27/21$

(86) Internationale Anmeldenummer:
**PCT/EP2002/005440**

(87) Internationale Veröffentlichungsnummer:
**WO 2003/014854 (20.02.2003 Gazette 2003/08)**

(54) **VERFAHREN ZUM AUFHEIZEN VON WASSER IN EINEM WASSERKOCHER**

METHOD FOR HEATING WATER IN AN ELECTRIC KETTLE

PROCEDE DE CHAUFFAGE D'EAU DANS UNE BOUILLOIRE

(84) Benannte Vertragsstaaten:
**AT BE CH CY DE DK ES FI FR GB GR IE IT LI LU MC NL PT SE TR**

(30) Priorität: **04.08.2001 DE 10138455**

(43) Veröffentlichungstag der Anmeldung:
**28.04.2004 Patentblatt 2004/18**

(73) Patentinhaber: **Braun GmbH**
**61476 Kronberg (DE)**

(72) Erfinder: **KRESSMANN, Frank**
**65760 Eschborn (DE)**

(74) Vertreter: **Müller, Eckhard**
**Mühlstrasse 9a**
**65597 Hünfelden-Dauborn (DE)**

(56) Entgegenhaltungen:
**EP-A- 0 380 369        EP-A- 0 704 186**
**US-A- 6 084 216**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Aufheizen von Wasser in einem Wasserkocher gemäß den Merkmalen des Anspruchs 1.

Aus dem Stand der Technik sind bereits Verfahren zum Aufheizen von Wasser in Wasserkesseln bekannt.

So wird in der europäischen Patentanmeldung EP 0 380 369 A1 bei der Erwärmung von Wasser die zeitliche Änderung der Temperatur gemessen. Das Erreichen des Siedepunktes wird dann erkannt, wenn die zeitliche Änderung der Temperatur abfällt bzw. null wird. Beim Erreichen des Siedepunktes findet trotz weiterer Energiezufuhr keine weitere Erwärmung des Wassers statt, da bei dieser Temperatur ein Phasenübergang des Wassers vom flüssigen in den dampfförmigen Aggregatzustand erfolgt. Die zugeführte Energie wird benötigt, um dem Wasser die für den Phasenübergang benötigte latente Wärme zuzuführen.

Bei diesem Verfahren wird also aus der zeitlichen Änderung der Temperatur abgeleitet, wann der Siedepunkt des Wassers erreicht wird, indem die zeitliche Änderung der Temperatur mit einem Schwellenwert verglichen wird, um, wenn dieser Schwellenwert in der Größenordnung von null unterschritten wird, zu erkennen, daß der Siedepunkt des Wassers erreicht ist. Auch hier wird dem Unterschied zwischen tatsächlicher Systemtemperatur und der am Temperatursensor gemessenen Temperatur keine Rechnung getragen. D.h., in Fällen, wo eine vorbestimmte Systemtemperatur erreicht werden soll, kommt es regelmäßig zum Überschwingen.

Nachteil dieses Verfahrens ist es ferner, daß hier nur Temperatursensoren zur Anwendung kommen können, die sehr hohen Anforderungen der Meßgenauigkeit genügen müssen. Insbesondere muß ein "flinkes" Sensorsystem verwendet werden, das auf Temperaturveränderungen schnell reagiert. Um diese Forderungen zu erfüllen, muß der Temperatursensor ferner unmittelbar mit dem Wasser in Berührung stehen, um möglichst schnell ein entsprechendes Sensorsignal genau in dem Moment zu erhalten, wenn das Wasser die Siedetemperatur erreicht. Außerdem ist dieses Verfahren sehr anfällig gegen absolute Fehler des Temperatursensors bei den einzelnen Messungen, da hier Anstiegswerte der Temperatur im unmittelbaren Bereich um null eine wesentliche Rolle spielen.

Schließlich ist aus der europäischen Patentanmeldung EP 0 704 186 A1 ein Verfahren zur Regelung der Wassertemperatur eines Wasserkessels in einer Brühgetränkemaschine bekannt. Darin wird das Wasser in einem offenen Wasserkessel zunächst bis zum Siedepunkt erhitzt. Dabei wird der Siedepunkt erreicht, indem das Wasser von der Ausgangstemperatur $T_i$ bis zu einer Temperatur $T_{high}$ erhitzt wird, bei der das Wasser unter üblichen Umgebungsbedingungen sicher noch nicht siedet. Hierzu wird die zeitliche Änderung der Temperatur dT/dt beim Erhitzen von der Ausgangstemperatur $T_i$ auf die Temperatur $T_{high}$ ermittelt wird. Dies geschieht, indem bei Erreichen der Temperatur $T_{high}$ aus der Differenz zwischen 100° C und $T_{high}$ sowie aus der zeitlichen Änderung der Temperatur dT/dt eine Zeit $t_{Heiz}$ ermittelt wird, und indem das Wasser bei Erreichen der Temperatur $T_{high}$ während der Zeit $t_{Heiz}$ weiter geheizt wird. Die Temperatur $T_{high}$ beträgt dabei ca. 75° C. Allerdings wird auch hier der Meßfehler, d.h. die Differenz zwischen der am Temperatursensor gemessenen Temperatur und der im System tatsächlich vorhanden Temperatur nicht berücksichtigt. Extreme Betriebszustände werden überhaupt nicht berücksichtigt.

Der vorliegenden Erfindung liegt das technische Problem zugrunde, ein Verfahren zum Aufheizen von Wasser bei einem Wasserkessel mit einem Heizelement zur Verfügung zu stellen, das die Nachteile des Standes der Technik vermeidet. Bei dem erfindungsgemäßen Verfahren soll das thermische Überschwingen der tatsächlichen Systemtemperatur über eine vorgewählte Zieltemperatur aufgrund einer zu spät abgeschalteten Heizung verhindert werden. Dies soll insbesondere auch bei unterschiedlichen Füllmengen des Wasserkessels und geringen Temperaturdifferenzen zwischen einer Starttemperatur und einer Zieltemperatur erreicht werden.

Dieses technische Problem wird durch ein Verfahren mit den Merkmalen des Patentanspruchs 1 gelöst. Vorteilhafte Ausgestaltung und Weiterbildungen der Erfindung werden in den Unteransprüchen beschrieben.

Insbesondere wird durch das erfindungsgemäße Verfahren beim Erwärmen einer thermischen Kapazität ein thermisches Überschwingen aufgrund einer zu spät abgeschalteten Heizung verhindert. Außerdem wird durch das Verfahren eine zeitliche Verzögerung zwischen Einschalten der Heizung und detektierbarer Erwärmung an einem Temperatursensor berücksichtigt. Trotz unterschiedlicher Füllmengen und unterschiedlicher Werte für eine Temperaturdifferenz zwischen einer Zieltemperatur und einer Starttemperatur kann mit dem erfindungsgemäßen Verfahren reproduzierbar eine voreingestellte Zieltemperatur erreicht werden. Ferner können durch das Verfahren kostengünstige Temperatursensoren bei entsprechenden Aufheizgeräten zum Einbau kommen.

Die voreingestellte Zieltemperatur kann dabei auch unterhalb der Siedetemperatur liegen. Dies ist beispielsweise der Fall, wenn bereits einmal aufgekochtes Wasser oder Mineralwasser für die Zubereitung von Babynahrung verwendet wird. Ein anderes Beispiel ist die Zubereitung von grünem Tee mit bereits einmal aufgekochtem Wasser bzw. bei der Verwendung von Mineralwasser.

Gerade bei der Wiederverwendung von bereits aufgekochtem Wasser können sehr geringe Temperaturdifferenzen zwischen der Zieltemperatur und der Starttemperatur auftreten. Dies bedeutet ferner, daß die Starttemperatur sowohl über als auch unter der Umgebungstemperatur liegen kann.

Bei einer geringen Wasserfüllmenge und der daraus resultierenden geringen Wärmekapazität des Systems sowie einem relativ träge ansprechen Temperatursensor, d.h. bei einer langen Totzeitphase $\Delta t_{tot}$, kann die Temperaturdifferenz $\Delta T_{SZ}$ zwischen der vorgewählten Zieltemperatur $T_{ziel}$ und einer gemessenen Starttemperatur $T_{Start}$ zu klein sein, um den Aufheizvorgang mit voller Heizleistung ohne Überschwingen durchführen zu können. In diesem Fall wird die Temperaturdifferenz $\Delta T_{SZ}$ als $\Delta T_{klein}$ bezeichnet. Dann wird ein auf rein rechnerisch ermitteiten Parametern beruhender gesteuerter Aufheizvorgang mit reduzierter Heizleistung durchgeführt, der nach Ablauf einer vorausberechneten Zeitspanne beendet wird.

Andernfalls, d.h. wenn die Temperaturdifferenz zwischen der vorgewählten Zieltemperatur und der gemessenen Starttemperatur $\Delta T_{SZ}$ größer als die Differenztemperatur $\Delta T_{klein}$ ist, wird ein geregelter Aufheizvorgang durchgeführt. Dies bedeutet, daß die Temperatur am Temperatursensor erfaßt und mit der voreingestellten Zieltemperatur verglichen wird. Dabei wird die Trägheit des Temperatursensors und die Wärmekapazität des Systems rechnerisch berücksichtigt. Bei Erreichen einer Endtemperatur $T_{end}$ am Temperatursensor, die unterhalb der voreingestellten Zieltemperatur $T_{Ziel}$ des Systems liegt, wird der Aufheizvorgang beendet.

Die Zieltemperatur wird hierdurch nach dem Temperaturausgleich im System ohne ein Überschwingen der Temperaturführung zielgenau in einem vorgegebenen Toleranzband erreicht. Hierdurch wird die Wasserzubereitungszeit deutlich verkürzt. Außerdem wird Heizleistung und damit elektrische Energie eingespart, die sonst unnötig in den Aufheizvorgang fließen würde. Durch die Aufteilung des Verfahrens in zwei alternative Ausführungsprozeduren, einer bei geringem Abstand der Zieltemperatur von der Starttemperatur und einer bei größerem Abstand der Zieltemperatur von der Starttemperatur, wird eine sichere Funktion auch in Grenzzuständen gewährleistet.

Die Merkmale der vorteilhaften Ausführungsform des Verfahrens nach Anspruch 2 lassen sich in der folgenden Formel ausdrücken:

$$C_{sys} = P_{el} \cdot \Delta t / \Delta T.$$

Dabei beschreibt $C_{sys}$ die Wärmekapazität des Systems, während $P_{el}$ die Heizleistung in Form von zugeführter elektrischer Leistung, $\Delta T$ die Temperaturdifferenz und $\Delta t$ die Zeitspanne beschreibt.

Bei dem Verfahren zum Aufheizen von Flüssigkeit nach Patentanspruch 2 wird das Heizelement nur für kurze Zeit mit Heizleistung beaufschlagt, so daß selbst bei minimaler Füllmenge die Temperatur $T_{end}$ noch nicht erreicht wird. Nach der kurzen Einschaltphase wird das Heizelement für eine vorbestimmte Wartezeit $\Delta t_{wait}$ abgeschaltet. Dabei wird die Zeit $\Delta t_{wait}$ so gewählt, daß die thermischen Ausgleichsprozesse in der Flüssigkeit abgeschlossen sind.

Die vorteilhafte Weiterbildung des Verfahrens zum Aufheizen von Flüssigkeit nach Patentanspruch 3 beschreibt eine mögliche Definition für $\Delta T_{klein}$. Alternativ können auch feste Grenzwerte für $\Delta T_{klein}$ vorgegeben werden.

Die vorteilhafte Ausgestaltung des Verfahrens mit den Merkmalen des Patentanspruchs 4 berücksichtigt die thermischen Ausgleichsvorgänge im System und die Trägheit des Temperatursensors bzw. der Temperatursensoren. $T_{end}$ ist dabei die am Temperatursensor gemessene Endtemperatur, zu welcher der Aufheizvorgang von der elektronischen Regelung beendet wird.

Bei der vorteilhaften Weiterbildung nach Patentanspruch 5 ist die Ansprechtemperatur $T_{trig}$ von der Empfindlichkeit des Temperatursensors bzw. der Temperatursensoren abhängig. Als Ansprechtemperatur $T_{trig}$ ist dabei die erste meßbare Temperatur zu verstehen, die sich von der Starttemperatur $T_{start}$ unterscheidet. $\Delta T_{trig}$ ist dabei die Differenz aus Starttemperatur $T_{start}$ und Ansprechtemperatur $T_{trig}$.

Die vorteilhafte Ausgestaltung des Verfahrens mit den Merkmalen des Patentanspruchs 6 ermöglicht es, daß der Kurvenverlauf der Temperaturkurve über der Zeit linear interpoliert werden kann.

Bei den vorteilhaften Ausgestaltungen des Verfahrens zum Aufheizen von Flüssigkeit mit den Merkmalen der Patentansprüche 7 bis 11 wird der Aufheizvorgang gemäß der ersten Alternative beschrieben. D.h., hier wird das gesteuerte Aufheizen näher ausgeführt, wenn $\Delta T_{SZ}$ gleich $\Delta T_{klein}$ ist.

Die vorteilhaften Weiterbildungen des Verfahrens mit den Merkmalen der Patentansprüche 12 bis 15 beschreiben den Aufheizvorgang gemäß der zweiten Alternative, d.h. das geregelte Aufheizen mittels elektronischer Regelung.

Bei dem vorteilhaften Verfahren zum Aufheizen von Flüssigkeit mit den Merkmalen des Patentanspruchs 12, wird mit $T'_{end}$ die tatsächliche Temperatur des Systems bezeichnet, die sich in einem vorgegebenen Toleranzband um die Zieltemperatur $T_{Ziel}$ einstellt.

Eine vorteilhafte Weiterbildung von Patentanspruch 12 weist die Merkmale des Patentanspruchs 13 auf. Dabei kann die Zeitspanne $\Delta t_{sample}$ variabel sein. Hierdurch wird die Sample-Rate bestimmt.

Eine vorteilhafte Weiterbildung des Verfahrens zum Aufheizen von Flüssigkeit nach Patentanspruch 13 sieht die Merkmale des Patentanspruchs 14 vor. Dabei können auch mehrere Steigungswerte gewichtet und gemittelt werden.

Schließlich weist eine vorteilhafte Weiterbildung des Verfahrens nach Patentanspruch 14 die Merkmale des Patentanspruchs 15 auf. Die Temperatur $T'_{end}$ liegt dabei in einem vorbestimmten Toleranzband um $T_{Ziel}$. Außerdem läßt sich daraus die Temperatur $T_{end}$ ermitteln, bei der der Aufheizvorgang von der elektronischen Regelung beendet wird. Die Extrapolation kann beispielsweise linear erfolgen.

Weitere Ausgestaltungen und Vorteile der Erfindung werden durch die Beschreibung der Ausführungsbeispiele unter Bezugnahme auf die beigefügten Zeichnungen erläutert. Darin zeigen:

Fig. 1 eine perspektivische Ansicht einer Ausführungsform eines zur Durchführung des erfindungsgemäßen Verfahrens geeigneten Wasserkochers;

Fig. 2 ein Flußdiagramm, welches schematisch ein erfindungsgemäßes Verfahren zum Aufheizen von Flüssigkeit in einem Wasserkocher gemäß Fig. 1 darstellt;

Fig. 3 ein Diagramm, welches den typischen Verlauf der Temperatur T über der Zeit t in einem Wasserkocher ohne Anwendung des erfindungsgemäßen Verfahrens darstellt;

Fig. 4 ein Diagramm, welches schematisch den Verlauf der Temperatur T über der Zeit t in einem Wasserkocher bei Anwendung des erfindungsgemäßen Verfahrens darstellt.

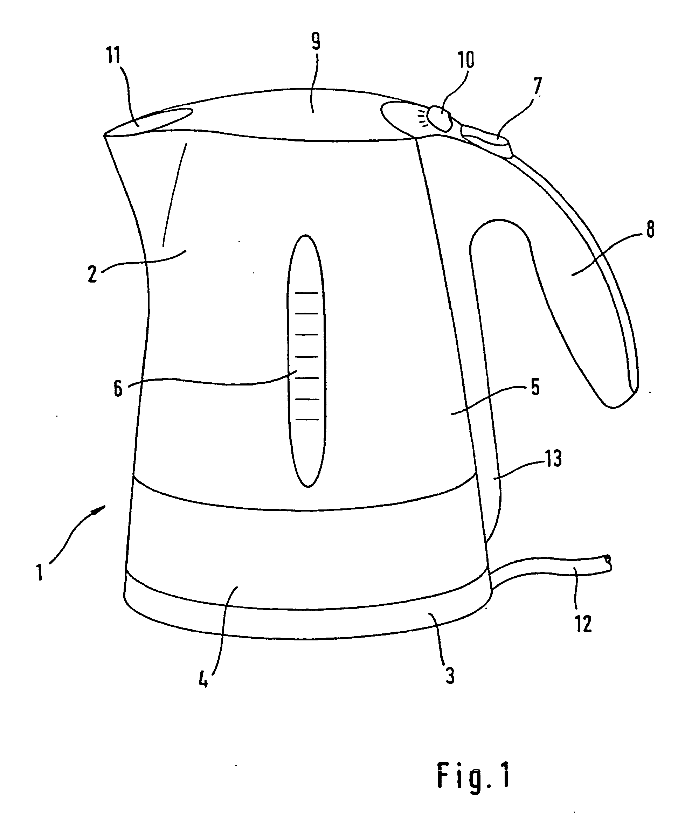

Fig. 1 zeigt eine perspektivische Ansicht einer vorteilhaften Ausführungsform eines zur Durchführung des erfindungsgemäßen Verfahrens zum Aufheizen von Flüssigkeit geeigneten Wasserkochers 1. Der Wasserkocher 1 weist einen Kessel 2, vorzugsweise aus temperaturbeständigem thermoplastischem Kunststoff oder Edelstahl, auf. An den Kessel 2 schließt sich im unteren Bereich ein im wesentlichen zylindrischer Kesselunterbau 4 an, in dem ein aus mehreren Heizeinheiten aufgebautes Heizelement und eine elektronische Regelung (beide nicht gezeigt) aufgenommen sind.

An der Unterseite des Kesselunterbaus 4 ist eine scheibenförmig ausgebildete Grundplatte 3 mit kreisförmiger Grundfläche angeordnet. Die Grundplatte 3 weist einen Stromanschluß 12 und eine nicht dargestellte im Zentrum der Grundplatte 3 angeordnete Induktionskupplung zur berührungslosen Stromübertragung auf. Der Wasserkocher 1 läßt sich vollständig von der Grundplatte 3 abheben.

Am oberen Ende des länglichen leicht kegelstumpfförmigen Wasserkochers 1 ist ein Deckel 9 angeordnet, der an einer Seite eine schnabelförmige Auslauföffnung 11 zum Ausschütten der Flüssigkeit freigibt. An der der Auslauföffnung 11 gegenüberliegenden Seite des Deckels 9 ist ein Wählschalter 10 zum manuellen Vorwählen einer Zieltemperatur angeordnet. Mit dem Wählschalter 10 läßt sich durch einen Bediener mittels Verdrehen eine auf einer Temperaturskala angegebene Zieltemperatur anwählen.

Hinter dem Wählschalter 10 ist ein Einschaltknopf 7 angeordnet. Über den Einschaltknopf 7 wird die Stromzufuhr für das Heizelement ein- bzw. abgeschaltet. Der Einschaltknopf 7 befindet sich dabei gleichzeitig am oberen Ende eines seitlich am Kessel 2 angeordneten Haltegriffs 8 in ergonomisch günstiger Position, damit er einfach von einem Daumen einer Bedienerhand betätigt werden kann.

Der Haltegriff 8 ist über einen länglichen Schaft 13 mit der Außenwand des Kessels 2 verbunden. Dabei erstreckt sich der Schaft 13 im wesentlichen über die gesamte Höhe des Wasserkochers 1, d.h. über den Kessel 2 und den Kesselunterbau 4. Der Schaft 13 dient ferner als Kabelführung für elektrische Kabel, die den Einschaltknopf 7 und den Wählschalter 10 mit der nicht dargestellten elektronischen Regelung im Kesselunterbau 4 verbinden.

Außerdem ist in Längsrichtung des Kessels 2, etwa um 90° zum Schaft 13 versetzt, eine aus transparentem Kunststoff ausgebildete Füllstandsanzeige 6 vorgesehen. Die Füllstandsanzeige 6 weist waagrechte Linien zur Anzeige eines entsprechenden Flüssigkeitsfüllstands auf. Insbesondere lassen sich an der Füllstandsanzeige 6 der minimale und der maximale Flüssigkeitsfüllstand ablesen.

Unterhalb der Marke für den minimalen Flüssigkeitsfüllstand ist in dem Schaft 13 ein Temperatursensor 5 vorgesehen. Dadurch wird sichergestellt, daß die Wassertemperatur auch bei minimalem Füllstand korrekt erfaßt wird. Der Temperatursensor erfaßt die Starttemperatur $T_{Start}$ einer Flüssigkeit, die in der Regel der Umgebungstemperatur entspricht, und die im Verlaufe des Aufheizvorgangs gemessenen Temperaturen.

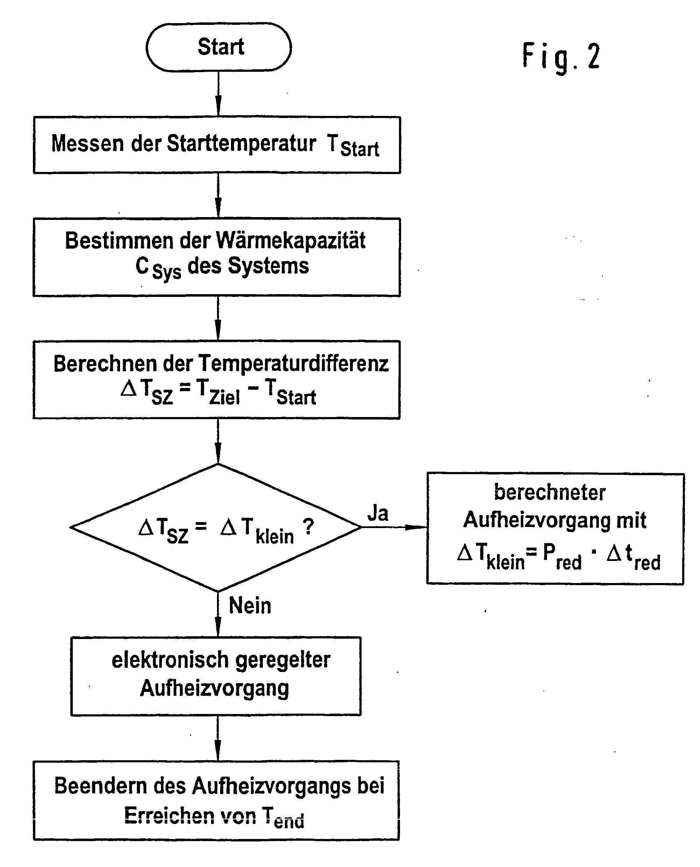

Fig. 2 zeigt ein Flußdiagramm, welches schematisch ein erfindungsgemäßes Verfahren zum Aufheizen von Flüssigkeit in einem Wasserkocher gemäß Fig. 1 darstellt. Nach dem manuellen Vorwählen einer Zieltemperatur und dem Betätigen des Einschalters läuft der Aufheizvorgang vollautomatisch ab. Der Aufheizvorgang erfolgt dabei gemäß folgender Verfahrensschritte:

1. Messen der Starttemperatur $T_{Start}$. Die Messung erfolgt dabei über einen im oder am Kessel angeordneten Temperatursensor. Dabei richtet sich die erforderliche Dauer für die Temperaturmessung nach der Empfindlichkeit des Temperatursensors.

2. Bestimmen der Wärmekapazität $C_{sys}$ des Systems. Die Wärmekapazität wird dabei rechnerisch aus $C_{sys} = P_{el} \cdot \Delta t / \Delta T$ bestimmt. Das Heizelement wird hierzu für nur eine kurze Zeitspanne mit Heizleistung beaufschlagt, so daß selbst bei minimaler Füllmenge die Temperatur $T_{end}$ noch nicht erreicht wird. Nach dem kurzzeitigen Einschalten des Heizelements wird das Heizelement für eine vorbestimmte Zeit $\Delta t_{wait}$ abgeschaltet. Dabei wird die Zeit $\Delta t_{wait}$ so gewählt, daß die thermischen Ausgleichsprozesse in der Flüssigkeit abgeschlossen sind.

3. Berechnen einer Differenztemperatur $\Delta T_{SZ}$ aus einer vorgewählten Zieltemperatur $T_{Ziel}$ und der gemessenen Starttemperatur $T_{Start}$. Der zweite und der dritte Verfahrensschritt können dabei auch vertauscht werden.

4. Falls die Differenztemperatur $\Delta T_{SZ}$ gleich der Differenztemperatur $\Delta T_{klein}$ ist, Aufheizen des Wasserkochers mit reduzierter Leistung $P_{red}$ für eine berechnete Zeitspanne $\Delta t_{red}$; oder

5. Falls die Differenztemperatur $\Delta T_{SZ}$ größer als $\Delta T_{klein}$ ist, geregeltes Aufheizen des Wasserkochers, wobei die Regelung eine am Temperatursensor meßbaren Temperatur $T_{end}$ berechnet, bei deren Erreichen der Aufheizvorgang beendet wird.

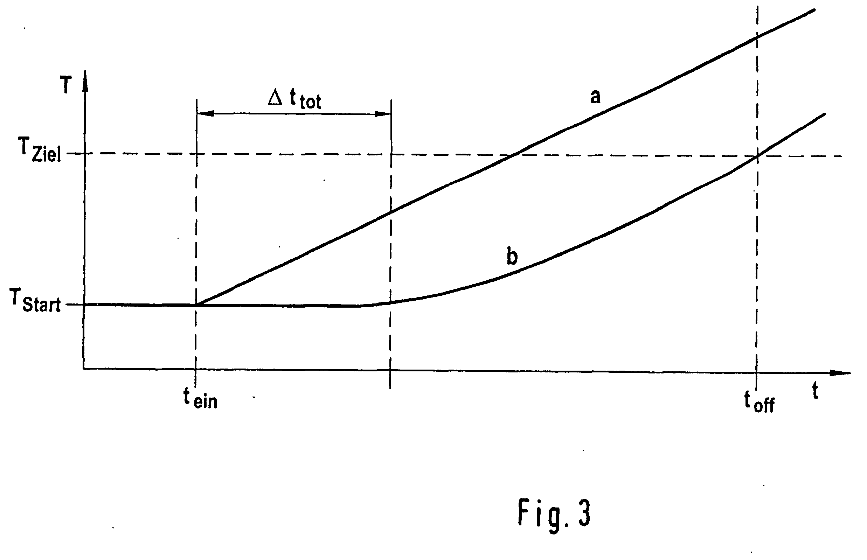

Fig. 3 zeigt ein Diagramm, welches den typischen Verlauf der Temperatur T über der Zeit t in einem Wasserkocher ohne Anwendung des erfindungsgemäßen Verfahrens darstellt. Auf der Abszisse ist dabei die Zeit t aufgetragen, wobei der Einschaltzeitpunkt des Wasserkochers mit $t_{ein}$ und der Ausschaltzeitpunkt des Wasserkochers mit $t_{off}$ gekennzeichnet sind.

Auf der Ordinatenachse ist die Temperatur T und hier insbesondere die gemessene Starttemperatur $T_{Start}$ und die gewählte Zieltemperatur $T_{Ziel}$ aufgetragen.

Im Diagram selbst sind zum einen der tatsächliche Temperaturverlauf im Wasserkessel als Kurve a und der am Temperatursensor gemessene Temperaturverlauf als Kurve b dargestellt. Der am Temperatursensor gemessene Temperaturverlauf stellt sich erst nach einer Totzeit $\Delta t_{tot}$ ein.

Der tatsächliche Temperaturverlauf ergibt sich dabei angenähert rechnerisch aus der Formel

$$(T_{Kessel} - T_{start}) = (P_{el} \cdot (t-t_{ein})/C_{sys}).$$

Darin bezeichnen $T_{Kessel}$ die tatsächlich Temperatur im Kessel, $T_{start}$ die Starttemperatur, $P_{el}$ die Zugeführte elektrische Heizleistung, $C_{sys}$ die Wärmekapazität des Systems, $t_{ein}$ den Einschaltzeitpunkt und t den Meßzeitpunkt.

Anhand des Diagramms in Fig. 3 wird deutlich, daß durch die Trägheit des Systems und durch die Trägheit des Temperatursensors die Zieltemperatur erst mit einer Verzögerung gemessen wird. Zu dem Zeitpunkt, zu dem die Maßkurve b die Linie der Zieltemperatur $T_{Ziel}$ schneidet, ist im Kessel aber tatsächlich bereits mehr Energie zugeführt worden als erforderlich. Das System überschwingt, wie aus Kurve a hervorgeht.

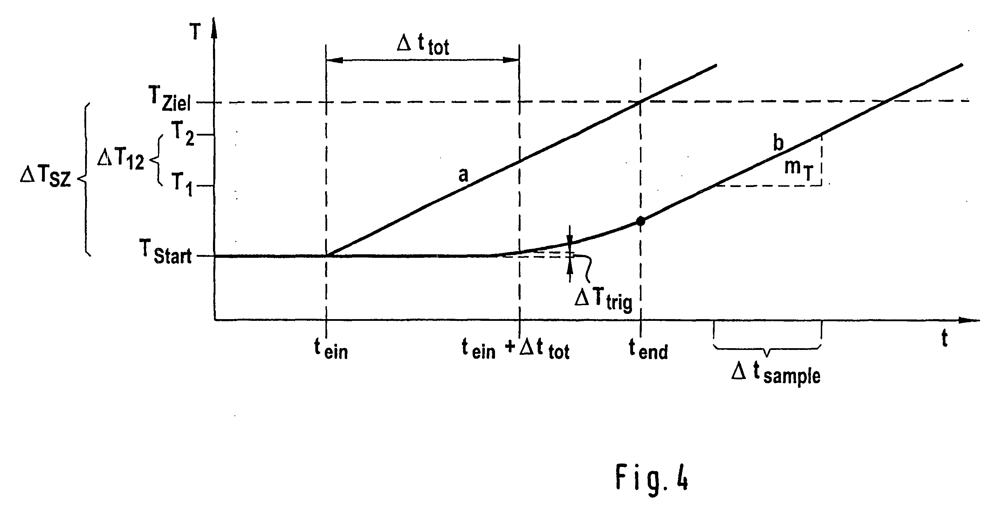

Fig. 4 zeigt ein Diagramm, welches beispielhaft schematisch den Kurvenverlauf der Temperatur T über der Zeit t in einem Wasserkocher bei Anwendung des erfindungsgemäßen Verfahrens darstellt.

Auf der Ordinatenachse ist die Temperatur T und hier insbesondere die gemessene Starttemperatur $T_{Start}$ und die gewählte Zieltemperatur $T_{Ziel}$ aufgetragen. Die Temperaturdifferenz zwischen der Starttemperatur $T_{Start}$ und der gewählten Zieltemperatur $T_{Ziel}$ wird als $\Delta T_{SZ}$ bezeichnet.

Der tatsächliche Temperaturverlauf im Wasserkessel, d.h. die Ist-Temperatur, ist wie in Fig. 3 mit a bezeichnet. Der am Temperatursensor gemessene Temperaturverlauf wird als Kurve b bezeichnet.

Außerdem ist die Totzeit $\Delta t_{tot}$, d.h. die Zeitspanne ab dem Einschalten des Wasserkochers zum Zeitpunkt $t_{ein}$ bis zum Erfassen eines ersten meßbaren Temperaturanstiegs, der Ansprechtemperatur $T_{trig}$, durch den Temperatursensor dargestellt.

Die elektronische Regelung schaltet beim geregelten Aufheizen des Wasserkochers das Heizelement ein und mißt die Zeitspanne $\Delta t_{tot}$, die vergeht, bis die Temperaturänderung am Temperatursensor mindestens eine Ansprechtemperatur $\Delta T_{trig}$ beträgt.

Ab dem Ende von $\Delta t_{tot}$ wird zyklisch über einen Zeitspanne $\Delta t_{sample}$ eine Temperaturdifferenz $\Delta T_{12}$ zu Beginn und nach Ablauf der Zeitspanne $\Delta t_{sample}$ gemessen, wobei aus $\Delta t_{sample}$ und $\Delta T_{12}$ die Steigung $m_T$ des Temperaturanstiegs bestimmbar ist. Aus $m_T$ und $\Delta t_{tot}$ kann dann die Temperatur $T'_{end}$ extrapoliert werden.

Lediglich aus Gründen der besseren Darstellung ist die Messung der Steigung $m_T$ erst nach dem Zeitpunkt $t_{end}$ dargestellt.

Zum Zeitpunkt $t_{end}$ wird der Wasserkocher abgeschaltet. Zwar mißt der Temperatursensor zu diesem Zeitpunkt noch nicht die gewählte Zieltemperatur $T_{Ziel}$, jedoch hat zu diesem Zeitpunkt die elektronische Regelung bereits die Steigung $m_T$ berechnet und die Totzeit $\Delta t_{tot}$ bestimmt, anhand derer der Temperaturverlauf im System extrapoliert wird.

**Patentansprüche**

1.  Verfahren zum Aufheizen von Wasser in einem Wasserkocher, wobei der Wasserko- cher einen mit Wasser befüllbaren Kessel, ein Heizelement, einen Temperatursensor, eine Vorrichtung zur Einstellung der Zieltemperatur $T_{Ziel}$ und eine elektronische Rege- lung aufweist, und wobei das Verfahren folgende Schritte aufweist:

    Messen der Starttemperatur $T_{Start}$;
    Bestimmen der Wärmekapazität $C_{Sys}$ des Systems;
    Berechnen einer Differenztemperatur $\Delta T_{SZ}$ aus einer vorgewählten Zieltemperatur $T_{Ziel}$ und der gemessenen Starttemperatur $T_{Start}$;
    falls die Differenztemperatur $\Delta T_{SZ}$ gleich einer geringen Differenztemperatur $\Delta T_{klein}$ ist, Aufheizen des Wasserkochers mit reduzierter Leistung $P_{red}$ für eine berechnete Zeit- spanne

$\Delta t_{red}$; oder

falls die Differenztemperatur $\Delta T_{SZ}$ größer als eine geringe Differenztemperatur $\Delta T_{klein}$ ist, geregeltes Aufheizen des Wasserkochers, wobei die Regelung eine am Tempera- tursensor meßbaren Temperatur $T_{end}$ berechnet, bei deren Erreichen der Aufheizvor- gang beendet wird.

2. Verfahren zum Aufheizen von Wasser nach Patentanspruch 1, wobei aus einer kurz- zeitig zugeführten Heizleistung und der Differenz zwischen der Starttemperatur $T_{Start}$ und einer Temperatur, die sich nach einer Wartezeit $\Delta t_{wait}$ nach Abschalten des Heize- lements einstellt, die Wärmekapazität $C_{sys}$ des Systems bestimmt wird.

3. Verfahren zum Aufheizen von Wasser nach Patentanspruch 1 oder 2, wobei die gerin- ge Differenztemperatur $\Delta T_{klein} < (P_{max} \cdot \Delta t_{tot} / C_{sys})$ ist, wobei $P_{max}$ die elektrischen Heizleistung des Systems ist und wobei $\Delta t_{tot}$ die Totzeit ist, bis der Temperatursensor anspricht.

4. Verfahren zum Aufheizen von Wasser nach einem der vorstehenden Ansprüche, wo- bei beim geregelten Aufheizen des Wasserkochers die am Temperatursensor gemes- sene Temperatur $T_{end} \leq T_{Ziel}$ ist.

5. Verfahren zum Aufheizen von Wasser nach Patentanspruch 1, wobei die elektronische Regelung das Heizelement beim geregelten Aufheizen des Wasserkochers einschaltet und die Zeitspanne $\Delta t_{tot}$ mißt, die vergeht, bis die Temperaturänderung am Temperatursensor mindestens eine Ansprechtemperatur $\Delta T_{trig}$ beträgt.

6. Verfahren zum Aufheizen von Wasser nach Patentanspruch 1, Aufteilen der Differenztemperatur $\Delta T_{SZ}$ in einen oder mehrere Bereiche in Abhängigkeit vom Abstand der Zieltemperatur $T_{Ziel}$ von der Starttemperatur $T_{Start}$.

7. Verfahren zum Aufheizen von Wasser nach Patentanspruch 1, wobei die reduzierte Heizleistung $P_{red}$ so gewählt ist, daß selbst bei minimaler Füllmenge nach erstmaligem meßbarem Temperaturanstieg die Temperatur $T_{end}$ am Temperatursensor noch nicht erreicht wird.

8. Verfahren zum Aufheizen von Wasser nach Patentanspruch 1 oder 7, wobei der Betrieb mit reduzierter Heizleistung $P_{red}$ über ein Puls-Pausen-Verhältnis erfolgt.

9. Verfahren zum Aufheizen von Wasser nach Patentanspruch 8, wobei bei einem Puls die volle Heizleistung anliegt und in einer Pause keine Heizleistung anliegt.

10. Verfahren zum Aufheizen von Wasser nach Patentanspruch 1 oder 7, wobei das Heizelement aus mehreren Heizeinheiten aufgebaut ist und beim Betrieb mit reduzierter Leistung $P_{red}$ zumindest eine Heizeinheit inaktiv ist.

11. Verfahren zum Aufheizen von Wasser nach Patentanspruch 1, wobei das Heizelement nur für eine kurze Zeitspanne $\Delta t_{kurz}$ mit reduzierter Leistung $P_{red}$ betrieben wird.

12. Verfahren zum Aufheizen von Wasser nach Patentanspruch 1, wobei $\Delta t_{tot}$ die Zeitspanne darstellt, mit der die Temperatur $T_{end}$ am Temperatursensor der tatsächlichen Temperatur $T'_{end}$ des Systems hinterher hinkt.

13. Verfahren zum Aufheizen von Wasser nach Patentanspruch 12, wobei ab dem Ende von $\Delta t_{tot}$ zyklisch über einen Zeitspanne $\Delta t_{sample}$ eine Temperaturdifferenz $\Delta T_{12}$ zu Beginn und nach Ablauf der Zeitspanne $\Delta t_{sample}$ gemessen wird.

14. Verfahren zum Aufheizen von Wasser nach Anspruch 13, wobei aus $\Delta t_{sample}$ und $\Delta T_{12}$ die Steigung $m_T$ des Temperaturanstiegs bestimmbar ist.

15. Verfahren zum Aufheizen von Wasser nach Anspruch 14, wobei aus $m_T$ und $\Delta t_{tot}$ die Temperatur $T'_{end}$ extrapolierbar ist.

**Claims**

1. Method for heating up water in a kettle, wherein the kettle has a boiler which can be filled with water, a heating element, a temperature sensor, an apparatus for setting the target temperature $T_{target}$, and an electronic controller, and wherein the method comprises the following steps:

measurement of the starting temperature $T_{start}$;
determination of the heating capacity $C_{sys}$ of the system;
calculation of a temperature difference $\Delta T_{ST}$ from a preselected target temperature $T_{target}$ and the measured starting temperature $T_{start}$;
heating up of the kettle with reduced power $P_{red}$ for a calculated period of time $\Delta t_{red}$ if the temperature difference $\Delta T_{ST}$ is equal to a slight temperature difference $\Delta T_{small}$; or
regulated heating up of the kettle if the temperature difference $\Delta T_{ST}$ is greater than a slight temperature difference $\Delta T_{small}$, the controller calculating a temperature $T_{final}$ which can be measured at the temperature sensor and the heating-up process being terminated when this temperature is reached.

**2.** Method for heating up water according to Patent Claim 1, wherein the heating capacity $C_{sys}$ of the system is determined from a briefly supplied heating power and the difference between the starting temperature $T_{start}$ and a temperature which is set after a waiting time $\Delta t_{wait}$ following switching off of the heating element.

**3.** Method for heating up water according to Patent Claim 1 or 2, wherein the slight temperature difference $\Delta T_{small}$ is $< (P_{max} \cdot \Delta t_{dead}/C_{sys})$, where $P_{max}$ is the electrical heating power of the system and where $\Delta t_{dead}$ is the dead time until the temperature sensor responds.

**4.** Method for heating up water according to one of the preceding claims, wherein the temperature $T_{final}$ measured at the temperature sensor is $\leq T_{target}$ during regulated heating up of the kettle.

**5.** Method for heating up water according to Patent Claim 1, wherein, during regulated heating up of the kettle, the electronic controller switches on the heating element and measures the period of time $\Delta t_{dead}$ which elapses until the change in temperature at the temperature sensor is equivalent to at least a response temperature $\Delta T_{trig}$.

**6.** Method for heating up water according to Patent Claim 1, wherein the temperature difference $\Delta T_{ST}$ is split up into one or more regions as a function of the difference between the target temperature $T_{target}$ and the starting temperature $T_{start}$.

**7.** Method for heating up water according to Patent Claim 1, wherein the reduced heating power $P_{red}$ is selected in such a way that, even with the minimum filling amount, the temperature $T_{final}$ is still not reached at the temperature sensor after the first, measurable rise in temperature.

**8.** Method for heating up water according to Patent Claim 1 or 7, wherein the kettle is operated with reduced power $P_{red}$ by means of a mark-space ratio.

**9.** Method for heating up water according to Patent Claim 8, wherein full heating power is provided during a mark and no heating power is provided during a space.

**10.** Method for heating up water according to Patent Claim 1 or 7, wherein the heating element is made up of a plurality of heating units, and at least one heating unit is inactive during operation with reduced power $P_{red}$.

**11.** Method for heating up water according to Patent Claim 1, wherein the heating element is operated with reduced power $P_{red}$ only for a brief period of time $\Delta t_{brief}$.

**12.** Method for heating up water according to Patent Claim 1, wherein $\Delta t_{dead}$ represents the period of time by which the temperature $T_{final}$ at the temperature sensor lags behind the actual temperature $T'_{final}$ of the system.

**13.** Method for heating up water according to Patent Claim 12, wherein as of the end of $\Delta t_{dead}$, a temperature difference $\Delta T_{12}$ is cyclically measured over a period of time $\Delta t_{sample}$ at the beginning and end of the period of time $\Delta t_{sample}$.

**14.** Method for heating up water according to Claim 13, wherein the gradient $m_T$ of the rise in temperature can be determined from $\Delta t_{sample}$ and $\Delta T_{12}$.

**15.** Method for heating up water according to Claim 14, wherein the temperature $T'_{final}$ can be extrapolated from $m_T$ and $\Delta t_{dead}$.

### Revendications

**1.** Procédé pour réchauffer de l'eau dans une bouilloire, la bouilloire comportant un cruchon pouvant être rempli d'eau, un élément chauffant, une sonde thermique, un dispositif de réglage de la température cible $T_{Ziel}$ et un système de régulation électronique, et le procédé comportant les étapes suivantes :

détermination de la capacité de chauffe $C_{sys}$ du système ;
calcul d'une température différentielle $\Delta T_{SZ}$ à partir d'une température cible $T_{Ziel}$ présélectionnée et de la température de départ $T_{Start}$ mesurée,
si la température différentielle $\Delta T_{SZ}$ est égale à une faible température différentielle $\Delta T_{klein}$, réchauffage de la bouilloire à puissance réduite $P_{red}$ pour une période $\Delta t_{red}$ calculée ou
si la température différentielle $\Delta t_{SZ}$ est supérieure à une faible température différentielle $\Delta T_{klein}$, réchauffage régulé de la bouilloire, le système de régulation calculant une température Tend mesurable à la sonde thermique, à l'atteinte de laquelle le processus de réchauffage est arrêté.

**2.** Procédé pour réchauffer de l'eau selon la revendication 1, la capacité de chauffe $C_{sys}$ du système étant déterminée à partir d'une puissance de chauffe alimentée à court terme et de la différence entre la température de départ $T_{Start}$ et une température qui se règle après un temps d'attente $\Delta t_{wait}$, après la mise à l'arrêt de l'élément de chauffe.

3. Procédé pour réchauffer de l'eau selon la revendication 1 ou 2, la faible température différentielle $\Delta t_{klein}$ étant < ($P_{max} \cdot$ ttot / $C_{sys}$), $P_{max}$ étant la puissance électrique de chauffe du système et $\Delta t_{tot}$ étant le temps mort, jusqu'au déclenchement de la sonde thermique.

4. Procédé pour réchauffer de l'eau selon l'une quelconque des revendications précédentes, lors du réchauffage régulé de la bouilloire, la température mesurée à la sonde thermique $T_{end}$ étant $\leq T_{Ziel}$.

5. Procédé pour réchauffer de l'eau selon la revendication 1, le système de régulation électronique mettant en route l'élément chauffant lors d'un réchauffage régulé de la bouilloire et mesurant la période $\Delta t_{tot}$, qui s'écoule jusqu'à ce que la modification de température à la sonde thermique corresponde au moins à une température de déclenchement $\Delta T_{trig}$.

6. Procédé pour réchauffer de l'eau selon la revendication 1, avec une division de la température différentielle $\Delta t_{SZ}$ en un ou en plusieurs secteurs, en fonction de l'écart entre la température cible $T_{Ziel}$ et la température de départ $T_{Start}$.

7. Procédé pour réchauffer de l'eau selon la revendication 1, la puissance de chauffe réduite $P_{red}$ étant sélectionnée de façon à ce que même si le niveau de remplissage est faible, la température $T_{end}$ n'est pas encore atteinte à la sonde thermique, après la première augmentation de température mesurable.

8. Procédé pour réchauffer de l'eau selon la revendication 1 ou 7, l'exploitation à puissance de chauffe réduite $P_{red}$ s'effectuant par l'intermédiaire d'un rapport impulsions/pauses.

9. Procédé pour réchauffer de l'eau selon la revendication 8, la pleine puissance de chauffe étant appliquée lors d'une impulsion et aucune puissance de chauffe n'étant appliquée pendant une pause.

10. Procédé pour réchauffer de l'eau selon la revendication 1 ou 7, l'élément étant conçu en plusieurs organes chauffants et lors de l'exploitation à puissance réduite $P_{red}$, au moins un organe chauffant étant inactif.

11. Procédé pour réchauffer de l'eau selon la revendication 1, l'élément chauffant n'étant exploité à puissance réduite $P_{red}$ que pendant une courte période $\Delta t_{kurz}$.

12. Procédé pour réchauffer de l'eau selon la revendication 1, $\Delta t_{tot}$ représentant la période au cours de laquelle la température $T_{end}$ à la sonde thermique suit péniblement la température effective $T'_{end}$.

13. Procédé pour réchauffer de l'eau selon la revendication 12, une température différentielle $\Delta T_{12}$ étant mesurée cycliquement au début et après écoulement de la période $\Delta t_{sample}$, à partir de la fin de $\Delta t_{tot}$.

14. Procédé pour réchauffer de l'eau selon la revendication 13, la pente $m_\tau$ pour l'augmentation de température pouvant être déterminée à partir de $\Delta t_{sample}$ et de $\Delta T_{12}$.

15. Procédé pour réchauffer de l'eau selon la revendication 14, la température $T'_{end}$ pouvant être extrapolée à partir de $m_\tau$ et de $\Delta t_{tot}$.

Fig.1

# Fig. 2

Start

Messen der Starttemperatur $T_{Start}$

Bestimmen der Wärmekapazität $C_{Sys}$ des Systems

Berechnen der Temperaturdifferenz $\Delta T_{SZ} = T_{Ziel} - T_{Start}$

$\Delta T_{SZ} = \Delta T_{klein}$ ?

Ja → berechneter Aufheizvorgang mit $\Delta T_{klein} = P_{red} \cdot \Delta t_{red}$

Nein

elektronisch geregelter Aufheizvorgang

Beendern des Aufheizvorgangs bei Erreichen von $T_{end}$

Fig. 3

EP 1 412 830 B1

Fig. 4

EP 1 412 830 B1